# EUROPÄISCHE PATENTSCHRIFT

(11) **EP 3 301 646 B1**
(45) Veröffentlichungstag und Bekanntmachung des Hinweises auf die Patenterteilung: **16.12.2020**
(21) Anmeldenummer: 17184427.7
(22) Anmeldetag: 02.08.2017
(51) Int. Cl.: G06T 7/80, B60R 11/04

(54) **KAMERASYSTEM UND FAHRZEUG UMFASSEND EIN DERARTIGES KAMERASYSTEM**
CAMERA SYSTEM AND VEHICLE COMPRISING SUCH A CAMERA SYSTEM
SYSTÈME DE CAMÉRAS ET VÉHICULE COMPRENANT UN TEL SYSTÈME DE CAMÉRAS

(30) Priorität: 29.09.2016 DE 102016218799
(43) Veröffentlichungstag der Anmeldung: 04.04.2018
(73) Patentinhaber: Robert Bosch GmbH, 70442 Stuttgart (DE)
(72) Erfinder: Focke, Thomas, 31180 Ahrbergen (DE); Klie, Patrick, 31139 Hildesheim (DE); Fortmeier, Dirk, 31141 Hildesheim (DE)

(56) Entgegenhaltungen:
- WO-A1-2015/110207
- DE-A1-102014 218 995
- DE-A1-102015 204 949
- JP-A- 2008 152 628
- US-A1- 2016 048 966
- TOBIAS EHLGEN ET AL: "Monitoring surrounding areas of truck-trailer combinations", PROCEEDINGS OF THE 5TH INTERNATIONAL CONFERENCE ON COMPUTER VISION SYSTEMS (ICVS 2007), 21. März 2007 (2007-03-21), XP055441393, BIELEFELD UNIVERSITY, GERMANY DOI: 10.2390/biecoll-icvs2007-76 ISBN: 978-3-00-020933-8

## Beschreibung

### Stand der Technik

Die vorliegende Erfindung betrifft ein Kamerasystem. Insbesondere ist mit dem Kamerasystem eine Rundumsicht generierbar. Des Weiteren betrifft die Erfindung ein Fahrzeug umfassend ein derartiges Kamerasystem.

Aus dem Stand der Technik sind Fahrzeuge bekannt, die ein Kamerasystem, aufweisen, wobei mit dem Kamerasystem Bilder rund um das Fahrzeug erfassbar sind. Insbesondere lassen sich virtuelle Draufsichten oder virtuelle Rundumsichten aus dem Kamerasystem erzeugen. Solche Kamerasysteme setzen voraus, dass die einzelnen Kameras entweder nicht an beweglichen Teilen des Fahrzeugs montiert sind oder die beweglichen Teile während des Erfassens der Bilder durch die Kameras nicht bewegt werden. Werden die beweglichen Teile dennoch bewegt, so ist ein Generieren der virtuellen Rundumsicht oder der virtuellen Draufsicht nicht mehr möglich.

Werden solche Kamerasysteme an Fahrzeugen mit Anhängern oder Gelenkfahrzeugen, wie insbesondere an Gelenkbussen, verwendet, so können Kameras nur an einem einzigen starren Gelenkglied angebracht werden. Dies schränkt die Verwendung solcher Kamerasysteme stark ein.

Aus der DE 10 2010 005 638 A1 ist ein Fahrassistenzsystem bekannt, dass eine Vielzahl von Kameras umfasst. Dabei ist vorgesehen, dass zumindest eine Kamera in einem Außenspiegel und damit in einem beweglichen Teil des Fahrzeugs angebracht ist. Die Kamera erfasst ein großräumiges Bild der Umgebung seitlich des Fahrzeugs. Wird der Außenspiegel des Fahrzeugs angeklappt, so wird dies erkannt und eine Änderung der Perspektive der Kamera bestimmt. Anschließend wird das von der Kamera ausgegebene Bild entsprechend bearbeitet, um die Ausgabe des Bildes an die veränderten Aufnahmebedingungen, insbesondere an die veränderte Aufnahmeperspektive, anzupassen. Auf diese Weise lässt sich stets ein korrektes Bild anzeigen, unabhängig davon, in welcher Stellung sich der Außenspiegel befindet. Ein solches Verfahren ermöglicht allerdings nur das Anzeigen einzelner Bilder. Es ist nicht möglich, die Daten der Kamera mit weiteren Kamerabildern zu kombinieren.

Die Schrift "Monitoring surrounding areas of truck-trailer combinations" von T.Ehlgen & T. Pajdla offenbart ein Verfahren zur Darstellung einer Umgebung einer LKW-Zugmaschine mit Anhänger aus einer Vogelperspektive mittels vier Kameras, wobei ein Magnetsensor zur Messung eines Winkels zwischen Zugmaschine und Anhänger verwendet wird (siehe D1, Zusammenfassung).

Die Offenlegungsschrift DE 10 2014 218 995 A1 offenbart ein Verfahren zur Bird-View-Darstellung eines Fahrzeuggespanns mit einem Zugfahrzeug und einem gekoppelten Anhänger. Am Zugfahrzeug ist wenigstens eine erste Kamera mit einem bekannten ersten Blickfeld und am Anhänger wenigstens eine zweite Kamera mit einem zweiten Blickfeld angeordnet. Es ist vorgesehen, dass die Bestimmung der Position und des Blickfelds der wenigstens einen zweiten Kamera an dem Anhänger durch einen Vergleich eines gemeinsamen Blickfeldes der wenigstens einen ersten und der wenigstens einen zweiten Kamera erfolgt.

Die Offenlegungsschriften US 2016/048966 A1 offenbart eine Berechnung des tatsächlichen Abstandes zwischen den Kameras unter Verwendung versetzter Bilder eines Referenzobjekts wie einer Fahrspurmarkierung von mindestens zwei Kameras, die mit einem Gelenkfahrzeug gekoppelt sind, überlagert und verschoben werden, bis die Referenzobjekte in jedem Bild ausgerichtet sind.

Die Offenlegungsschrift JP 2008152628 A offenbart eine Anzeigevorrichtung für zusammengesetzte Bilder, die Fehlanpassungen aufheben kann und in einem zusammengesetzten Bild erzeugt wird, wenn ein bewegliches Teil, an dem eine Fotovorrichtung angebracht ist, bewegt wird.

### Offenbarung der Erfindung

Das erfindungsgemäße Kamerasystem ermöglicht vorteilhafterweise ein Anbringen einzelner Kameras an beweglichen Teil eines Fahrzeugs. Allgemein ermöglicht das erfindungsgemäße Kamerasystem mehrere Kameras bereitzustellen, wobei zumindest eine Kamera relativ zu den anderen Kameras bewegbar ist. Dabei lässt sich gleichzeitig eine Kombination von Ansichten aus den Einzelbildern der einzelnen Kameras zu einem Gesamtbild generieren.

Das Kamerasystem eines Fahrzeugs umfasst zumindest eine erste Kamera und zumindest eine zweite Kamera. Dabei ist vorgesehen, dass die erste Kamera relativ zu der zweiten Kamera bewegbar ist. Dies erfolgt insbesondere unabhängig von einer aktuellen Position und Ausrichtung der beweglichen Kamera. Das Kamerasystem umfasst weiterhin eine Speichervorrichtung zum Speichern jeweils einer Kamerakalibrierung jeder Kamera. Anhand der Kamerakalibrierungen sind Einzelbilder der ersten Kamera und der zweiten Kamera zu einer Gesamtansicht kombinierbar. Insbesondere ist anhand der Kamerakalibrierung eine Vorschrift bekannt, nach welcher Bildbearbeitungsprozesse auf die Rohdaten der jeweiligen Kamera anzuwenden sind, um anschließend eine Abbildung zu erhalten, die hinsichtlich Perspektive und Randstellen bei allen Einzelbildern der einzelnen Kameras gleich ist. So lassen sich die Abbildungen einfach zu einer Gesamtansicht kombinieren. Die Gesamtansicht kann insbesondere eine Rundumsicht oder eine virtuelle Draufsicht sein.

Weiterhin umfasst das Kamerasystem eine Rechenvorrichtung. Die Rechenvorrichtung ist zum Korrigieren der gespeicherten Kamerakalibrierung der ersten Kamera eingerichtet. Das Korrigieren erfolgt insbesondere aufgrund einer Bewegung der ersten Kamera. Durch die Bewegung der ersten Kamera ist die ursprünglich gespeicherte Kamerakalibrierung nicht mehr auf die Rohdaten der ersten Kamera anwendbar, da sich eine Position und/oder Ausrichtung der ersten Kamera verändert hat. Daher ist dies durch die Rechenvorrichtung zu korrigieren. Außerdem ist die Rechenvorrichtung zum Generieren der Gesamtansicht basierend auf der gespeicherten Kamerakalibrierung eingerichtet. Da für die erste Kamera stets eine aktuelle Kamerakalibrierung vorliegt, die eine aktuelle Position und/oder Ausrichtung berücksichtigt, ist jederzeit das Generieren von Gesamtansichten ermöglicht. Somit erlaubt das Kamerasystem auch das Verwenden von beweglichen Kameras, insbesondere von Kameras, die an beweglichen Teilen des Fahrzeugs angebracht sind, um virtuelle Draufsichten und/oder virtuelle Rundumsicht erzeugen zu können.

Die Unteransprüche zeigen bevorzugte Weiterbildungen der Erfindung.

Erfindungsgemäß ist vorgesehen, dass die erste Kamera an einem beweglichen Bauteil des Fahrzeugs anbringbar ist. Dabei ist außerdem vorgesehen, dass die Speichervorrichtung zum Speichern eines Bewegungsmodells des beweglichen Bauteils ausgebildet ist. Die Rechenvorrichtung ist zum Korrigieren der gespeicherten Kamerakalibrierung der ersten Kamera anhand des Bewegungsmodells ausgebildet. Durch das Bewegungsmodell ist somit bestimmbar, welche aktuelle Position und/oder Ausrichtung die erste Kamera aufweist, wenn die Einbauposition der Kamera an dem beweglichen Bauteil bekannt ist. Somit ist insbesondere eine Kamerakalibrierung nicht für unterschiedliche Positionen und/oder Ausrichtung der ersten Kamera zu speichern, vielmehr ist ausreichend die Kamerakalibrierung für eine beliebige Position und Ausrichtung der ersten Kamera durchzuführen und diese zusammen mit der Position und Ausrichtung, an der die Kalibrierung durchgeführt wurde, in der Speichervorrichtung zu speichern. Anhand des Bewegungsmodells und der gespeicherten Position und Ausrichtung lässt sich somit die Kamerakalibrierung für jede beliebige weitere Position und/oder Ausrichtung, die durch das Bewegungsmodell abgebildet ist, korrigieren. Somit ist das Generieren von Gesamtansichten mehrerer Kamerabilder auch bei beweglichen Kameras ermöglicht.

Die Speichervorrichtung dient bevorzugt zum Speichern einer Einbauposition und einer Initialausrichtung der ersten Kamera an dem beweglichen Bauteil. Insbesondere ist vorgesehen, dass die Kalibrierung der ersten Kamera in der Einbauposition sowie der Initialausrichtung durchgeführt und in der Speichervorrichtung gespeichert ist. Diese Kamerakalibrierung lässt sich somit für jede Bewegung aus der Einbauposition heraus und für jede Ausrichtung von der Initialausrichtung weg korrigieren, bevorzugt anhand des zuvor beschriebenen Bewegungsmodells.

Das Bewegungsmodell umfasst vorteilhafterweise ein CAD-Modell. Das CAD-Modell ist vorteilhafterweise während der Konstruktion des Fahrzeugs erstellt worden und zeigt insbesondere eine Bewegbarkeit des beweglichen Bauteils. Somit ist zum Erstellen des Bewegungsmodells kein zusätzlicher Aufwand notwendig, da auf bereits vorhandene Daten zurückgegriffen werden kann. Das CAD-Modell weist außerdem bevorzugt die Einbauposition sowie die Initialausrichtung der ersten Kamera auf, sodass diese Daten nicht separat in der Speichervorrichtung gespeichert werden müssen. Durch das Speichern des CAD-Modells innerhalb der Speichervorrichtung ist somit jederzeit eine Korrektur der gespeicherten Kamerakalibrierung der ersten Kamera ermöglicht.

Vorteilhafterweise ist außerdem vorgesehen, dass das Kamerasystem eine Erfassungseinheit aufweist. Die Erfassungseinheit ist insbesondere ein Sensor. Die Erfassungseinheit dient zum Erfassen der Bewegung des beweglichen Bauteils. Insbesondere zusammen mit dem zuvor beschriebenen Bewegungsmodells besonders vorteilhaft dem CAD-Modell, ist somit eine aktuelle Position und/oder Ausrichtung der ersten Kamera dadurch bestimmbar, dass zunächst die Auslenkung des beweglichen Bauteils aus einer Normalposition anhand der Erfassungseinheit erfasst wird, um diese Bewegung anschließend in dem Bewegungsmodell, insbesondere in dem CAD-Modell, nachzuvollziehen. Somit lässt sich besagte aktuelle Position und/oder Ausrichtung leicht aus dem CAD-Modell berechnen. Mit der berechneten aktuellen Position und/oder Ausrichtung ist dann die Kalibrierung der ersten Kamera korrigierbar. Hierzu ist lediglich zu vergleichen, die aktuelle Position und Ausrichtung von derjenigen Position und Ausrichtung abweicht, der die Kalibrierung durchgeführt wurde.

Alternativ zu der Erfassungseinheit ist die Rechenvorrichtung vorteilhafterweise zum Abschätzen einer Bewegung des beweglichen Bauteils ausgebildet. Somit ist wiederum bestimmbar, in welcher Position sich das bewegliche Bauteil befindet. Damit ist das Berechnen einer aktuellen Position und/oder Ausrichtung der ersten Kamera analog wie zuvor beschrieben.

Die Rechenvorrichtung ist insbesondere zum Korrigieren der gespeicherten Kamerakalibrierung der ersten Kamera anhand eines erfassten Gelenkwinkels und/oder eines erfassten Lenkwinkels des Fahrzeugs ausgebildet. Diese Daten lassen sich insbesondere aus einem CAN-Signal ermitteln. Dies ist insbesondere dann vorteilhaft, wenn das Kamerasystem an einem Gelenkfahrzeug oder an einem Fahrzeug mit Anhänger angebracht ist. In diesem Fall ist eine Bewegung der beweglichen Kamera abhängig von dem Lenkwinkel und/oder des Gelenkwinkels.

Die Rechenvorrichtung ist außerdem erfindungsgemäß zum laufenden Berechnen der Kamerakalibrierung der ersten Kamera und der zweiten Kamera ausgebildet. Das laufende Berechnen der Kamerakalibrierungen erfolgt erfindungsgemäß anhand eines optischen Flusses. Außerdem ist die Rechenvorrichtung zum Speichern der neu berechneten Kamerakalibrierung in der ersten Kamera und der zweiten Kamera in der Speichervorrichtung ausgebildet. Somit ist stets sichergestellt, dass eine aktuelle Kamerakalibrierung für jede einzelne Kamera vorliegt. Auf diese Weise lassen sich hochgenaue Gesamtabbildungen durch Kombination der Daten der ersten Kamera und der zweiten Kamera generieren.

Die Erfindung betrifft weiterhin ein Fahrzeug umfassend ein Kamerasystem wie zuvor beschrieben. Das Fahrzeug ist insbesondere ein Personenkraftfahrzeug oder ein Lastkraftfahrzeuge und kann insbesondere ein Gelenk und/oder einen Anhänger aufweisen. Dabei ist vorgesehen, dass die erste Kamera an einen beweglichen Bauteil des Fahrzeugs angebracht ist, während die zweite Kamera einem starren Bauteil des Fahrzeugs angeordnet ist. Somit ist die erste Kamera relativ zu der zweiten Kamera bewegbar.

Das bewegliche Bauteil ist bevorzugt ein Außenspiegel und/oder eine Fahrzeugtür. Da mit dem Kamerasystem vorteilhafterweise eine Rundumsicht um das Fahrzeug gewährleistet werden soll, ist somit jede Seite des Fahrzeugs durch mindestens eine Kamera zu erfassen. Dabei ist vorteilhaft, wenn die Kameras jeweils an einer äußeren Extremität des Fahrzeugs angebracht werden. Daher ist vorteilhaft, dass jeweils eine Kamera in einem Außenspiegel des Fahrzeugs angeordnet ist. Somit ist sichergestellt, dass die Seitenbereiche des Fahrzeugs eingesehen werden können. Durch das zuvor beschriebene Kamerasystem ist ein Betreiben der an den Außenspiegeln des Fahrzeugs angebrachten Kameras auch dann möglich, wenn die Außenspiegel eingeklappt oder sonstig bewegt sind.

Die Erfindung betrifft schließlich ein Verfahren zum Erzeugen einer Gesamtansicht aus Daten einer ersten Kamera und einer zweiten Kamera. Dabei ist vorgesehen, dass die erste Kamera relativ zu der zweiten Kamera bewegbar ist. Das Verfahren umfasst die folgenden Schritte: zunächst erfolgt ein Korrigieren einer gespeicherten Kamerakalibrierung der ersten Kamera. Das Korrigieren erfolgt aufgrund einer Bewegung der ersten Kamera, so dass eine ursprünglich vorhandene Kamerakalibrierung der ersten Kamera nicht mehr gültig ist. Dabei ist vorgesehen, dass, wie zuvor beschrieben, anhand der Kamera Kalibrierungen der ersten Kamera und der zweiten Kamera Einzelbilder der ersten Kamera und der zweiten Kamera zu der Gesamtansicht kombinierbar sind. Anschließend erfolgt ein Generieren der Gesamtansicht basierend auf den gespeicherten Kamerakalibrierungen. Dabei werden insbesondere die zuvor hinsichtlich des Kamerasystems beschriebenen Aspekte auch hinsichtlich des Verfahrens angewandt.

### Kurze Beschreibung der Zeichnungen

Nachfolgend wird ein Ausführungsbeispiel der Erfindung unter Bezugnahme auf die begleitenden Zeichnungen im Detail beschrieben. In den Zeichnungen sind:
- Figur 1: eine schematische Abbildung eines Kamerasystems gemäß einem Ausführungsbeispiel der Erfindung,
- Figur 2: eine schematische Abbildung eines Fahrzeugs mit einem Kamerasystem gemäß dem Ausführungsbeispiel der Erfindung, und
- Figur 3: eine schematische Abbildung eines Verfahrens gemäß dem Ausführungsbeispiel der Erfindung.

### Ausführungsform der Erfindung

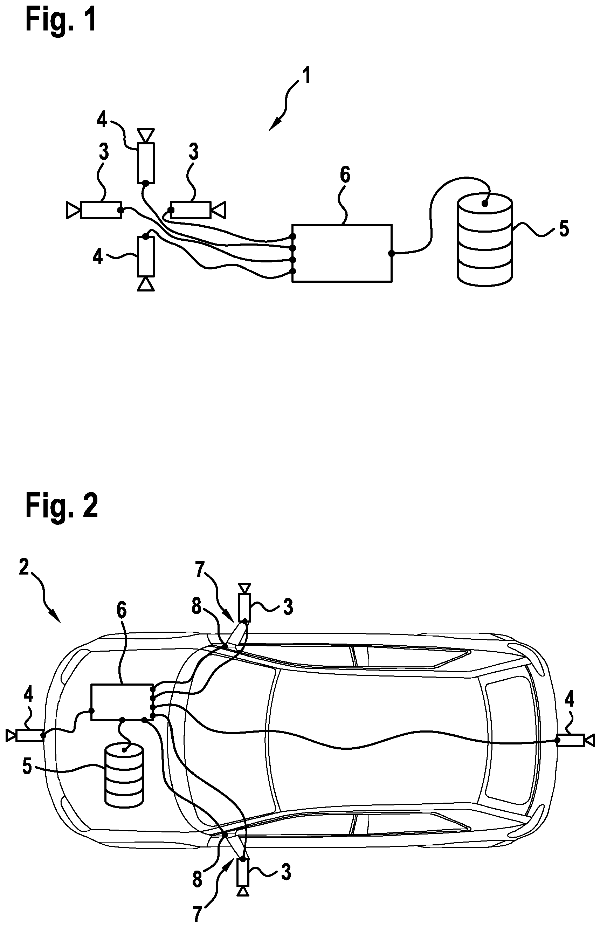

Figur 1 zeigt schematisch eine Abbildung eines Kamerasystems 1 gemäß einem Ausführungsbeispiel der Erfindung. Das Kamerasystem 1 umfasst zwei erste Kameras 3 und zwei zweite Kameras 4. Dabei ist vorgesehen, dass die ersten Kameras 3 relativ zu den zweiten Kameras 4 bewegbar sind. Außerdem ist vorgesehen, dass die Einzelbilder der Kameras 3, 4 zu einem Gesamtbild zusammenfügbar sind. Insbesondere decken die Kameras 3, 4 einen Raumbereich rund um einen Gegenstand vollständig ab. Somit lassen sich aus dem Einzelbilder der Kameras 3, 4 bevorzugt virtuelle Draufsichten oder virtuelle Rundumsichten generieren.

Die Kameras 3, 4 sind mit einer Rechenvorrichtung 6 verbunden. Die Rechenvorrichtung 6 dient insbesondere zum Zusammenfügen der Einzelbilder der Kameras 3, 4 zu der Gesamtansicht. Außerdem weist das Kamerasystem 1 eine Speichervorrichtung 5 auf. In der Speichervorrichtung 5 sind Kamerakalibrierungen der Kameras 3, 4 gespeichert. Anhand der Kamerakalibrierungen lassen sich die Einzelbilder der Kameras 3, 4 zu der Gesamtansicht zusammensetzen.

Figur 2 zeigt schematisch die Verwendung des Kamerasystems 1 in einem Fahrzeug 2. Dabei ist vorgesehen, dass die ersten Kameras 3 an beweglichen Bauteilen 7 des Fahrzeugs 2 angebracht sind. Insbesondere sind die ersten Kameras 3 an Außenspiegeln des Fahrzeugs 2 angebracht. Die zweite Kameras 4 sind an einer Frontseite und an einer Rückseite des Fahrzeugs 2 angebracht. Über die Kameras 3, 4 ist somit ermöglicht, ein gesamtes Umfeld des Fahrzeugs 2 zu erfassen. Dies ermöglicht der Rechenvorrichtung 6, eine virtuelle Draufsicht auf oder eine virtuelle Rundumsicht um das Fahrzeug 2 aus den Daten der Kameras 3, 4 zu generieren.

Um die Einzelbilder der Kameras 3, 4 zu einer Gesamtansicht zusammenzusetzen, ist eine Kamerakalibrierung für jede einzelne Kamera 3, 4 benötigt. Eine solche Kalibrierung entspricht der Ermittlung von derartigen Daten, die angeben, wie die Rohdaten der Kameras 3, 4 zu bearbeiten sind, um eine nahtlose Gesamtansicht mit durchgängig gleicher Perspektive zu erhalten. Eine solche Kalibrierung lässt sich für die zweiten Kameras 4 initial erstellen, da diese Kameras nicht bewegt werden. Für die ersten Kameras 3 ist ein solches initiales Erstellen einer Kalibrierung nur dann möglich, wenn die beweglichen Bauteile 7 nicht bewegt werden. Ansonsten ist die initial erstellte Kalibrierung für die ersten Kameras 3 nach einer Bewegung nicht mehr gültig.

Um die ersten Kameras 3 auch dann verwenden zu können, wenn die beweglichen Bauteile des Fahrzeugs 2 bewegt werden, ist eine Korrektur der Kalibrierung notwendig. Dazu ist vorgesehen, dass die Rechenvorrichtung 6 mit jeweils einer Erfassungseinheit 8 verbunden ist, wobei jede Erfassungseinheit 8 zum Erfassen einer Bewegung des beweglichen Bauteils 7 ausgebildet ist. Weiterhin ist vorgesehen, dass in der Speichervorrichtung 5 ein Bewegungsmodell 100, insbesondere ein CAD-Modell 200, des beweglichen Bauteils 7 gespeichert ist.

Anhand der Erfassungseinheit 8 ist es der Rechenvorrichtung 6 ermöglicht, eine aktuelle Ausrichtung des beweglichen Bauteils 7 zu bestimmen. Anhand des Bewegungsmodells 100, insbesondere des CAD-Modells 200, ist es der Rechenvorrichtung 6 außerdem ermöglicht, eine Bewegung nachzuvollziehen, die das bewegliche Bauteil 7 durchgeführt haben muss, um in die aktuelle Ausrichtung zu gelangen. Schließlich ist bevorzugt vorgesehen, dass die Speichervorrichtung 5 eine Einbauposition sowie eine Initialausrichtung der ersten Kameras 3 an den beweglichen Bauteilen zwischenspeichert. Somit ist anhand der nachvollzogenen Bewegung des beweglichen Bauteils 7 aufgrund des Bewegungsmodells 100, insbesondere des CAD-Modells 200, ermöglicht, auch eine aktuelle Position und eine aktuelle Ausrichtung der ersten Kameras 3 zu berechnen.

Auf diese Weise ist einerseits eine Kamerakalibrierung für eine Einbauposition und eine Initialausrichtung der ersten Kameras 3 bekannt, während außerdem eine von der Einbauposition und der Initialausrichtung abweichende aktuelle Position und Ausrichtung der ersten Kameras 3 bekannt ist. Basierend auf diesen Daten ist es einfach möglich, die Kamerakalibrierung der ersten Kameras 3 zu korrigieren. Dies wird von der Rechenvorrichtung 6 durchgeführt, wobei die korrigierte Kamerakalibrierung für jede erste Kamera 3 in der Speichervorrichtung 5 gespeichert wird. Somit steht in der Speichervorrichtung 5 jederzeit eine aktuelle Kamerakalibrierung für jede erste Kamera 3 zur Verfügung, wodurch jederzeit eine Gesamtansicht aus den Einzelbildern der ersten Kameras 3 und der zweiten Kameras 4 erzeugt werden kann. Dies ist vorteilhafterweise unabhängig von einer Bewegung der beweglichen Bauteile 7.

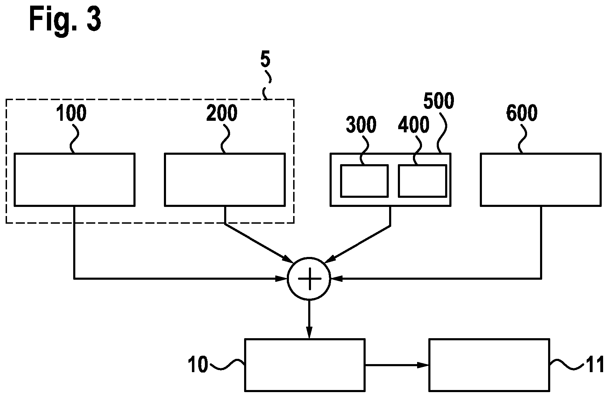

In Figur 3 ist schematisch ein Verfahren gezeigt, wie es von der Rechenvorrichtung 6 ausgeführt wird. So erfolgt ein Schritt des Korrigierens 10 der gespeicherten Kamerakalibrierung der ersten Kamera 3. Für diesen Schritt werden folgende Eingangsdaten gesammelt: Zum einen erfolgt das Auslesen des zuvor beschriebenen Bewegungsmodells 100, insbesondere des CAD Modells 200, aus der Speichervorrichtung 5. Zum anderen erfolgt vorteilhafterweise ein Empfang eines CAN-Signals 500, das mindestens einen aktuell erfassten Lenkwinkel 400 des Fahrzeugs 2 aufweist. Im Falle eines Gelenkbetriebs (Anhänger) ist zusätzlich noch die Information über den Gelenkwinkel erforderlich. Dieser kann über den optischen Fluss der Kameras am beweglichen Anhänger oder über eine Messvorrichtung direkt am Gelenk bestimmt werden. Diese Daten sind insbesondere dann notwendig, wenn das Fahrzeug 2 einen Anhänger aufweist oder mit einem Gelenk versehen ist, insbesondere ein Gelenksbus ist, und zumindest eine der ersten Kameras 3 aufgrund des Gelenks oder aufgrund der Koppelung des Anhängers relativ zu den zweiten Kameras 4 bewegbar ist.
Außerdem erfolgt bevorzugt ein Korrigieren der Kamerakalibrierung basierend auf einem optischen Fluss 600. Das Korrigieren der Kamerakalibrierung basierend auf dem optischen Fluss 600 kann vorteilhafterweise für die erste Kamera und die zweite Kammer 4 durchgeführt werden. Auf diese Weise ist stets eine aktualisierte Kamerakalibrierung unabhängig von einer überlagerten Bewegung der Kameras 3, 4 vorhanden.

Nach dem Durchführen des Schritts des Korrigierens 10 erfolgt ein Schritt des Generierens 11 der Gesamtansicht aus dienen Teilbildern der ersten Kameras 3 und der zweiten Kameras 4. Das Generieren 11 der Gesamtansicht basiert auf den in der Speichervorrichtung 5 gespeicherten Kamerakalibrierungen. Da die gespeicherten Kamerakalibrierungen für die ersten Kameras 3 und zweiten Kameras 4 jederzeit aktuell sind, insbesondere aufgrund des zuvor durchgeführten Schritt des Korrigierens 10, ist somit ein Generieren 11 der Gesamtansicht jederzeit möglich, unabhängig von einer Bewegung der beweglichen Bauteile 7.

Es ist somit ersichtlich, dass durch das Kamerasystem 1 eine Kompensation der Bewegung von einzelnen Kameras ermöglicht ist. Somit steht als Resultat eine Visualisierung einer Gesamtansicht zur Verfügung, wobei die Gesamtansicht aus den Einzelbildern aller vorhandener Kameras 3, 4 generiert wird. Sollten einzelne Bereiche aufgrund der Bewegung der ersten Kameras 3 von keiner der Kameras 3, 4 mehr erfasst werden können, so werden diese Bereiche bevorzugt mit einer leeren und/oder farbigen Fläche innerhalb der Gesamtansicht repräsentiert.

In dem zuvor beschriebenen Ausführungsbeispiel wurde eine Erfassungseinheit 8 verwendet, um die Bewegung der beweglichen Bauteile 7 zu erfassen. Alternativ oder zusätzlich ist ermöglicht, dass das durch die Rechenvorrichtung 6 eine Kamerabewegung der ersten Kameras 3 abschätzbar ist. Das Schätzen erfolgt bevorzugt basierend auf dem Bewegungsmodell 100, insbesondere dem CAD-Modell 200.

Besonders vorteilhaft eignet sich das Kamerasystem 1 für die folgenden Anwendungsfälle:
- langer Gelenkbus mit der Kameras 3, 4 an allen beteiligten Gelenken
- Lastkraftwagen mit Anhänger mit Kameras 3, 4 sowohl am Zugfahrzeug als auch am Anhänger
- Pkw mit Anhänger mit Kameras 3, 4 sowohl am Zugfahrzeug als auch am Anhänger

Das beschriebene Kamerasystem ist in keiner Weise beschränkt auf zwei Kameras, sondern entfaltet seine Vorteile insbesondere bei Systemen mit mehr als zwei Kameras, wobei die beschriebenen Rechenvorschriften für mehrere Kameras gelten und daraufhin angewendet eine vorteilhafte gegenseitige Plausibilisierung der berechneten Kamerakalibrierungen ermöglichen.

Ferner existiert keine Beschränkung auf eine Teilmenge starrer sowie einer einzigen Teilmenge beweglicher Kameras. Vielmehr ist es möglich, mehrere Teilmengen beweglicher Kameras zu berücksichtigen, wie z.B. ein PKW mit Anhänger, der Kameras an den Außenspiegeln (1. Teilmenge beweglicher Kameras) sowie weitere Kameras am Anhänger aufweist (2. Teilmenge beweglicher Kameras).

## Patentansprüche

1. Kamerasystem (1) für ein Fahrzeug (2) umfassend
• zumindest eine erste Kamera (3), die relativ zu zumindest einer zweiten Kamera (4) bewegbar ist, wobei die erste Kamera (3) eingerichtet ist, an einem beweglichen Bauteil (7) des Fahrzeugs (2) angebracht zu werden, und
• eine Speichervorrichtung (5) zum Speichern jeweils einer Kamerakalibrierung jeder Kamera (3, 4) und eines Bewegungsmodells (100) des beweglichen Bauteils (7), wobei anhand der Kamerakalibrierungen Einzelbilder der ersten Kamera (3) und der zweiten Kamera (4) zu einer Gesamtansicht kombinierbar sind, **dadurch gekennzeichnet, dass** das Kamerasystem (1)
• eine Rechenvorrichtung (6) aufweist, eingerichtet zum
∘ Korrigieren (10) der gespeicherten Kamerakalibrierung der ersten Kamera (3) aufgrund einer Bewegung der ersten Kamera (3), wobei eine Berechnung der Kamerakalibrierung der ersten Kamera (3) und der zweiten Kamera (4) anhand eines optischen Flusses (600) durchgeführt wird, wobei die Berechnung laufend erfolgt, wobei die Rechenvorrichtung (6) zum Korrigieren der gespeicherten Kamerakalibrierung der ersten Kamera (3) anhand eines Bewegungsmodells (100) ausgebildet ist,
∘ Speichern der berechneten Kamerakalibrierung in der Speichervorrichtung (5), und
∘ Generieren (11) der Gesamtansicht basierend auf den gespeicherten Kamerakalibrierungen.

2. Kamerasystem (1) nach Anspruch 1, **dadurch gekennzeichnet, dass** die Speichervorrichtung (11) zum Speichern einer Einbauposition sowie einer Initialausrichtung der ersten Kameras (3) an dem beweglichen Bauteil (7) ausgebildet ist.

3. Kamerasystem (1) nach Anspruch 1 oder 2, **dadurch gekennzeichnet, dass** das Bewegungsmodell ein CAD-Modell (200) umfasst.

4. Kamerasystem (1) nach einem der Ansprüche 1 bis 3, **gekennzeichnet durch** eine Erfassungseinheit (8), insbesondere einen Sensor, zum Erfassen der Bewegung des beweglichen Bauteils (7).

5. Kamerasystem (1) nach einem der Ansprüche 1 bis 3, **dadurch gekennzeichnet, dass** die Rechenvorrichtung (6) zum Abschätzen einer Bewegung des beweglichen Bauteils (7) ausgebildet ist.

6. Kamerasystem (1) nach einem der vorhergehenden Ansprüche, **dadurch gekennzeichnet, dass** die Rechenvorrichtung (6) zum Korrigieren der gespeicherten Kamerakalibrierung der ersten Kamera (3) anhand eines erfassten Gelenkwinkels (300) und/oder eines erfassten Lenkwinkels (400) des Fahrzeugs (2) ausgebildet ist.

7. Fahrzeug (2) umfassend ein Kamerasystem (1) nach einem der vorhergehenden Ansprüche.

8. Fahrzeug (2) nach Anspruch 7, **dadurch gekennzeichnet, dass** das bewegliche Bauteil (7) ein Außenspiegel und/oder eine Fahrzeugtür ist.

9. Verfahren zum Erzeugen einer Gesamtansicht aus Daten einer ersten Kamera (3) und einer zweiten Kamera (4), wobei die erste Kamera (3) relativ zu der zweiten Kamera (4) bewegbar ist, umfassend die Schritte:
a. Korrigieren (10) einer gespeicherten Kamerakalibrierung der ersten Kamera (3) aufgrund einer Bewegung der ersten Kamera (3), wobei eine Berechnung der Kamerakalibrierung der ersten Kamera (3) und der zweiten Kamera (4) anhand eines optischen Flusses (600) durchgeführt wird, wobei die Berechnung laufend erfolgt, wobei die Rechenvorrichtung (6) zum Korrigieren der gespeicherten Kamerakalibrierung der ersten Kamera (3) anhand eines Bewegungsmodells (100) ausgebildet ist,
b. Speichern der berechneten Kamerakalibrierung in einer Speichervorrichtung (5), und
c. Generieren (11) der Gesamtansicht basierend auf den gespeicherten Kamerakalibrierungen.

## Claims

1. Camera system (1) for a vehicle (2), comprising:
• at least a first camera (3) which can move relate to at least a second camera (4), wherein the first camera (3) is configured to be mounted on a movable component (7) of the vehicle (2), and
• a memory device (5) for respectively storing a camera calibration of each camera (3, 4) and a movement model (100) of the movable component (7), wherein individual images of the first camera (3) and of the second camera (4) can be combined on the basis of the camera calibrations to form an overall view,
**characterized in that** the camera system (1)
• has a computing device (6) which is configured to
∘ correct (10) the stored camera calibration of the first camera (3) on the basis of a movement of the first camera (3), wherein a calculation of the camera calibration of the first camera (3) and of the second camera (4) is carried out on the basis of an optical flow (600), wherein the calculation occurs continuously, wherein the computing device (6) is designed to correct the stored camera calibration of the first camera (3) on the basis of a movement model (100),
∘ store the calculated camera calibration in the memory device (5), and
∘ generate (11) the overall view on the basis of the stored camera calibrations.

2. Camera system (1) according to Claim 1, **characterized in that** the memory device (11) is designed to store an installation position and an initial orientation of the first cameras (3) on the movable component (7).

3. Camera system (1) according to Claim 1 or 2, **characterized in that** the movement model comprises a CAD model (200).

4. Camera system (1) according to one of Claims 1 to 3, **characterized by** a sensing unit (8), in particular a sensor, for sensing the movement of the movable component (7) .

5. Camera system (1) according to one of Claims 1 to 3, **characterized in that** the computing device (6) is designed to estimate a movement of the movable component (7) .

6. Camera system (1) according to one of the preceding claims, **characterized in that** the computing device (6) is designed to correct the stored camera calibration of the first camera (3) on the basis of a sensed articulation angle (300) and/or a sensed steering angle (400) of the vehicle (2).

7. Vehicle (2) comprising a camera system (1) according to one of the preceding claims.

8. Vehicle (2) according to Claim 7, **characterized in that** the movable component (7) is an exterior mirror and/or a vehicle door.

9. Method for generating an overall view from data of a first camera (3) and of a second camera (4), wherein the first camera (3) can move relative to the second camera (4), comprising the steps:
a. correcting (10) a stored camera calibration of the first camera (3) on the basis of a movement of the first camera (3), wherein a calculation of the camera calibration of the first camera (3) and of the second camera (4) is carried out on the basis of an optical flow (600), wherein the calculation takes place continuously, wherein the computing device (6) is designed to correct the stored camera calibration of the first camera (3) on the basis of a movement model (100),
b. storing the calculated camera calibration in a memory device (5), and
c. generating (11) the overall view on the basis of the stored camera calibrations.

## Revendications

1. Système de caméras (1) destiné à un véhicule (2) comprenant
• au moins une première caméra (3) qui est déplaçable par rapport à au moins une deuxième caméra (4), la première caméra (3) étant adaptée pour être fixée à un élément mobile (7) du véhicule (2), et
• un dispositif de mémorisation (5) destiné à mémoriser un étalonnage de chaque caméra (3, 4) et un modèle de mouvement (100) de l'élément mobile (7), des images individuelles de la première caméra (3) et de la deuxième caméra (4) pouvant être combinés sur la base des étalonnages de caméra pour former une vue d'ensemble,
**caractérisé en ce que** le système de caméras (1)
• comporte un dispositif de calcul (6) adapté pour
∘ corriger (10) l'étalonnage mémorisé de la première caméra (3) en raison d'un mouvement de la première caméra (3), l'étalonnage de la première caméra (3) et de la deuxième caméra (4) étant calculé sur la base d'un flux optique (600), le calcul étant effectué en continu, le dispositif de calcul (6) étant conçu pour corriger l'étalonnage mémorisé de la première caméra (3) sur la base d'un modèle de mouvement (100),
∘ mémoriser l'étalonnage calculé dans le dispositif de mémorisation (5), et
∘ générer (11) la vue d'ensemble sur la base des étalonnages mémorisés.

2. Système de caméras (1) selon la revendication 1, **caractérisé en ce que** le dispositif de mémorisation (11) est destiné à mémoriser une position de montage et une orientation initiale de la première caméra (3) sur l'élément mobile (7).

3. Système de caméras (1) selon la revendication 1 ou 2, **caractérisé en ce que** le modèle de mouvement comprend un modèle CAO (200).

4. Système de caméras (1) selon l'une des revendications 1 à 3, **caractérisé par** une unité de détection (8), en particulier un capteur, destinée à détecter le mouvement de l'élément mobile (7).

5. Système de caméras (1) selon l'une des revendications 1 à 3, **caractérisé en ce que** le dispositif de calcul (6) est conçu pour estimer un mouvement de l'élément mobile (7).

6. Système de caméras (1) selon l'une des revendications précédentes, **caractérisé en ce que** le dispositif de calcul (6) est conçu pour corriger l'étalonnage mémorisé de la première caméra (3) en fonction d'un angle d'articulation détecté (300) et/ou d'un angle de braquage détecté (400) du véhicule (2).

7. Véhicule (2) comprenant un système de caméras (1) selon l'une des revendications précédentes.

8. Véhicule (2) selon la revendication 7, **caractérisé en ce que** l'élément mobile (7) est un rétroviseur extérieur et/ou une portière de véhicule.

9. Procédé de génération d'une vue d'ensemble à partir de données d'une première caméra (3) et d'une deuxième caméra (4), la première caméra (3) étant mobile par rapport à la deuxième caméra (4), le procédé comprenant les étapes suivantes :
a. corriger (10) l'étalonnage mémorisé de la première caméra (3) en raison d'un mouvement de la première caméra (3), l'étalonnage de la première caméra (3) et de la deuxième caméra (4) étant calculé sur la base d'un flux optique (600), le calcul étant effectué en continu, le dispositif de calcul (6) étant conçu pour corriger l'étalonnage mémorisé de la première caméra (3) sur la base d'un modèle de mouvement (100),
b. mémoriser l'étalonnage calculé dans un dispositif de mémorisation (5), et
c. générer (11) la vue d'ensemble sur la base des étalonnages mémorisés.
